# FASCICULE DE BREVET EUROPEEN

(11) **EP 3 674 036 B1**
(45) Date de publication et mention de la délivrance du brevet: **31.08.2022**
(21) Numéro de dépôt: 19214571.2
(22) Date de dépôt: 09.12.2019
(51) Int. Cl.: B25B 23/147, H02K 1/02, H02K 7/14, H02K 11/24, B25B 23/14, H02K 7/00

(54) **OUTIL ÉLECTROPORTATIF ÉQUIPÉ D'UN TRANSFORMATEUR TOURNANT DOTÉ DE SUPPORTS DE BOBINE EN PLASTO-FERRITE**
TRAGBARES ELEKTROWERKZEUG, DAS MIT EINEM DREHTRANSFORMATOR MIT SPULENHALTERUNGEN AUS PLASTOFERRIT AUSGESTATTET IST
PORTABLE ELECTRIC TOOL EQUIPPED WITH A ROTATING TRANSFORMER PROVIDED WITH PLASTO-FERRITE COIL SUPPORTS

(30) Priorité: 21.12.2018 FR 1873880
(43) Date de publication de la demande: 01.07.2020
(73) Titulaire: ETABLISSEMENTS GEORGES RENAULT, 44800 Saint Herblain (FR)
(72) Inventeur: GILIBERT, Arnaud, 44800 SAINT HERBLAIN (FR); PICARD, Julien, 29000 QUIMPER (FR); GUIHARD, Christophe, 44780 MISSILLAC (FR)
(74) Mandataire: Vidon Brevets & Stratégie

(56) Documents cités:
- EP-A1- 3 043 458
- WO-A1-2010/144048
- FR-A1- 2 839 825

## Description

### 1. DOMAINE DE L'INVENTION

Le domaine de l'invention est celui de la conception et de la fabrication d'outils électromécaniques utilisés dans l'industrie et pouvant être une visseuse, une perceuse ou un dispositif de mesure du couple. Plus précisément, l'invention concerne un transformateur tournant embarqué sur le rotor d'un outil électromécanique et conçus pour générer une tension électrique destinée à alimenter une carte électronique placée sur le rotor. Les supports des bobines contenues dans le transformateur tournant selon l'invention sont fabriqués en plasto-ferrite pour leur conférer une résistance au choc accrue.

### 2. ARRIÈRE-PLAN TECHNOLOGIQUE

De nombreux outils électromécaniques sont utilisés dans l'industrie, sur des chaînes de fabrication automobile par exemple. Ces outils sont par exemple : des visseuses, des clés à choc ou à impulsions, des perceuses, des dispositifs de mesure de couple, et de façon générale tout outil doté d'un arbre animé en rotation et se prolongeant à une extrémité par un organe terminal, un embout de vissage par exemple. Ce type d'outil est soumis à des conditions d'utilisation sévères : forte productivité et chocs dus à des manipulations peu précautionneuses ou à des accostages peu amortis dans le cadre de machine automatique ou encore des vibrations propres à des visseuses à serrage discontinu.

Ces outils peuvent disposer d'un moyen de mesure du couple appliqué sur l'arbre de sortie rotatif. Il s'avère que la mesure de couple dans ces outils électromécanique procure de meilleurs résultats si elle est appliquée au plus près de l'organe terminal et donc sur l'arbre de sortie de la visseuse. Des capteurs de couple dits dynamiques ont été développés à cet effet.

Dans ce type de structure, les jauges de contrainte sont collées sur l'arbre rotatif sous la forme d'un pont de Wheastone, il n'est pas possible de les alimenter et de récupérer leur signal avec de simples fils faisant la jonction électrique entre l'arbre tournant et la carte électronique de l'outil. Pour répondre à cette difficulté, des solutions utilisant un transformateur tournant, ont été développées pour réaliser la connexion électrique entre le carter de l'outil et l'arbre. Un transformateur tournant offre une bonne durabilité, ce qui n'est pas le cas d'un collecteur électrique dont les balais sont soumis à de l'usure. Les visseuses intègrent généralement une mesure de couple sur l'arbre.

Un outil rotatif utilisant des moyens inductifs sans contacts mécaniques pour assurer l'alimentation et la communication avec les moyens de mesure du couple qui sont embarqués sur l'arbre, comporte notamment les éléments suivants :
- un carter formant l'enveloppe extérieure de l'outil,
- une carte électronique principale supportant les moyens de contrôle de la visseuse,
- des éléments d'interface permettant le support mécanique de la visseuse durant son fonctionnement ainsi que son activation et l'affichage de son statut,
- des moyens moteur, intégrant éventuellement un moteur électrique synchrone à aimant permanent animant en rotation un arbre de sortie,
- des moyens de mesure du couple intégrant :
   - une carte électronique embarquée sur l'arbre de sortie.
   - un pont de jauge de contraintes collé sur l'arbre de sortie
- un transformateur tournant comportant un stator fixe par rapport au carter et un rotor fixe par rapport à l'arbre et situé en vis-à-vis du stator, le stator étant relié à la carte électronique principale et le rotor étant relié à la carte embarquée.

Le transformateur assure l'alimentation électrique par induction de la carte embarquée sur l'arbre rotatif. Ce transformateur tournant comporte typiquement deux bagues, l'une pour le stator et l'autre pour le rotor, ces bagues étant réalisées en ferrite. Les poudres de ferrite sont composées d'oxyde de fer (manganèse, nickel). Les propriétés magnétiques des poudres de ferrites sont obtenues par un traitement thermique. Ce mode d'obtention est analogue à la fabrication de ferrite où la poudre de ferrite munie de son liant est compactée avant passage au four.

La fonction de la carte électronique embarquée consiste à récupérer une tension d'alimentation venant du rotor et de la transmettre aux jauges après redressement puis à récupérer la tension de sortie des jauges, la conditionner et la transmettre au rotor. Une carte électronique principale est portée par le carter et fonctionne de façon complémentaire avec la carte embarquée sur l'arbre de sortie.

Le brevet EP0712105 "Electrical power and signal transmission system", déposé le 14/11/1994 décrit une telle solution. Ce type de structure utilise un transformateur tournant dont les bagues sont réalisées en ferrite pour satisfaire à une circulation correcte du champ magnétique. Ces composants sont composés de deux bobines disposées sur un support capable de canaliser le flux magnétique. Ce support est réalisé en ferrite et mis en œuvre par frittage. Ce matériau procure une performance particulière au transformateur tournant caractérisé par sa perméabilité magnétique. Les surfaces des bagues en vis-à-vis sont dimensionnées pour permettre la transmission du flux magnétique d'une bague à l'autre au travers de l'entrefer.

D'autres documents de l'état de la technique décrivent en partie ou totalité ce type de dispositif, qui sont cités ci-après au titre d'arrière-plan technologique :
- le document DE 1920890 déposé le 03/04/1980 illustre un exemple de transformateur tournant.
- le document EP0159825 déposé le 15/06/1984 illustre un capteur de couple utilisant des transformateurs tournants.
- le document JPS614676 déposé le 28/03/1992 illustre une visseuse pneumatique munie d'un capteur de couple à jauges de contraintes sur l'arbre de sortie, l'alimentation des jauges de contraintes étant réalisée par 1 premier transformateur tournant et la récupération du signal par un second transformateur tournant.
- le document DE4210201 déposé le 28/03/1992 illustre une visseuse pneumatique munie d'un capteur de couple à jauges de contraintes sur l'arbre de sortie, l'alimentation et la récupération du signal des jauges de contraintes étant réalisées par 1 transformateur tournant. Une électronique de traitement du signal est embarquée sur l'arbre tournant pour conditionner le signal avant de le renvoyer vers les moyens de contrôle de l'outil par le même transformateur tournant.
- le document DE4307131 déposé le 06/03/1993 illustre une mesure de couple sur un arbre de sortie de visseuse, l'alimentation et la récupération du signal des jauges de contraintes étant réalisées par 1 transformateur tournant.
- le document DE19637934 déposé le 1/09/1996 illustre des moyens de mesure de couple sur l'arbre de sortie d'une visseuse d'angle. Un transformateur tournant est utilisé pour alimenter les jauges de contraintes sur l'arbre tournant. Le signal produit par ces jauges est renvoyé vers les moyens de contrôle de l'outil grâce à des moyens optique.
- le document JP2010184329 déposé le 13/02/2009 illustre une visseuse utilisant des transformateurs tournant dont la géométrie améliore la fiabilité.
- le document WO2007063106 déposé le 01/05/2005 illustre une visseuse d'angle comportant des moyens de mesure de couple sur son arbre de sortie. Un transformateur tournant est utilisé pour alimenter et récupérer le signal d'un pont de jauges collées sur l'arbre.
- le document WO2010144048 déposé le 11/06/2009 illustre une visseuse selon le préambule de la revendication 1 comportant des moyens de mesure de couple sur un arbre tournant. Un transformateur tournant est utilisé pour alimenter et récupérer le signal d'un pont de jauges collées sur l'arbre. Les éléments en ferrite sont fragiles et risque de se fendre et de casser sous le choc, par exemple lors de la chute de l'outil sur le sol. La réparation d'un tel outil est fastidieuse car elle nécessite un démontage complet de l'arbre rotatif.

La réalisation d'un transformateur tournant par frittage de poudre de ferrite impose un procédé de frittage spécifique à chaque géométrie et ne permet pas l'emploi d'une méthode d'usinage standard.

### 3. OBJECTIFS DE L'INVENTION

L'invention a notamment pour objectif d'apporter une solution efficace à au moins certains de ces différents problèmes.

En particulier, selon au moins un mode de réalisation, un objectif de l'invention est de fournir une solution pour renforcer la résistance aux chocs de l'élément permettant de mesurer le couple appliqué à l'arbre rotatif d'un outil électromécanique.

Un autre objectif de l'invention est de mettre en place une technique de réalisation d'un transformateur qui utilise des moyens standards, fiables et robustes, mais également simples de conception. Cette technique doit également permettre de diminuer les coûts de production du transformateur.

### 4. PRESENTATION DE L'INVENTION

Pour ceci, l'invention propose un outil électromécanique comportant un carter, un arbre animant en rotation un embout, et un transformateur tournant. L'arbre rotatif intégre un circuit électronique destiné à mesurer une grandeur physique de l'arbre, et le transformateur tournant comporte un stator solidarisé avec le carter et un rotor fixé à l'arbre rotatif. Le stator intégre un premier bobinage et un premier support de ce premier bobinage, le rotor intégre un deuxième bobinage et un deuxième support de ce deuxième bobinage. Les supports sont réalisés en matériau plasto-ferrite.

De cette manière, l'outil ainsi réalisé est plus solide et résiste mieux aux chocs, en particulier aux chutes.

Selon un premier mode de réalisation, la grandeur physique mesurée est un couple ou une force. De cette façon, l'outil est renseigné sur le couple ou la force qui s'applique sur les pièces en mouvement, plus particulièrement le couple appliqué sur une vis ou la force de traction installée dans une vis à la suite d'un vissage.

Selon un autre mode de réalisation, le matériau plasto-ferrite est constitué de différents métaux réduits en poudre et d'une matrice plastique liant les grains de métal.

Selon un autre mode de réalisation, la matrice est choisie dans la liste de matériaux suivants : polyamide, polyacétale. polysulfure de phénylène.

Selon un autre mode de réalisation, la concentration en ferrite est comprise entre 80 % et 95 % de la masse totale du matériau plasto-ferrite.

Selon un autre mode de réalisation, le diamètre des fils entourant lesdits bobinages se situe entre 0.25 et 0.35 millimètres.

Selon un autre mode de réalisation, la poudre de ferrite est amagnétique.

Selon un autre mode de réalisation, la poudre de ferrite est choisie dans une liste de poudre comprenant: (alliage de Fer, Nickel, Zinc, Aluminium et Silicium), (alliage de Fer et Sodium).

Selon un autre mode de réalisation, la perméabilité magnétique de la plasto-ferrite est comprise entre 5 et 30.

Selon un autre mode de réalisation, le rapport du nombre de spires du stator sur celui du rotor est compris entre 0,2 et 0,5.

### 5. DESCRIPTION DES FIGURES

D'autres caractéristiques et avantages de l'invention apparaîtront à la lecture de la description suivante de modes de réalisation particuliers, donnée à titre de simple exemple illustratif et non limitatif, et des dessins annexés parmi lesquels :
- [Fig 1] : la figure 1 illustre un schéma d'un outil électromécanique mettant en œuvre l'invention ;
- [Fig 2] : la figure 2 illustre une courbe d'hystérésis représentant la relation entre la force de champ H et l'aimantation B ;
- [Fig 3] : la figure 3 représente la section d'un transformateur tournant vue de face et vue de coté selon un exemple de réalisation ;
- [Fig 4] : la figure 4 montre une vue en perspective du couplage entre le rotor et le stator selon un autre mode de réalisation d'un transformateur tournant ;
- [Fig 5] : la figure 5 montre une vue en coupe d'un outil montrant le rotor et le stator d'un transformateur tournant selon un exemple de réalisation.

### 6. DESCRIPTION DE MODES DE REALISATION PARTICULIERS

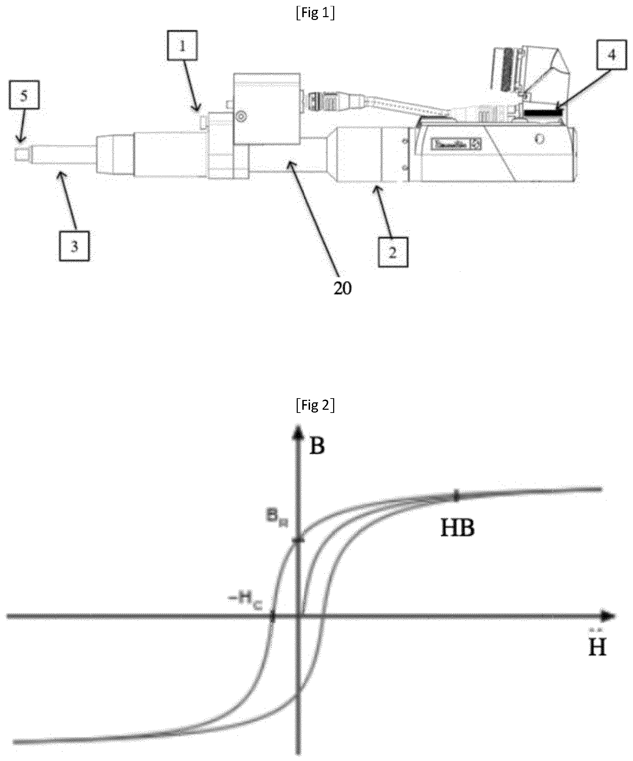

On présente en relation avec les figures 1, 3 à 6 un outil électroportatif, une visseuse par exemple, doté d'un capteur de couple embarqué sur l'arbre rotatif. La présente invention repose sur l'usage d'un matériau nommé plasto-ferrite alliant une matrice en plastique ou résine chargée avec de la poudre de ferrite.

La **Fig. 1** présente un exemple d'outil électromécanique selon un exemple de réalisation de l'invention. Selon cet exemple, l'outil est un dispositif de vissage, ou visseuse 1. Ainsi que cela est représenté sur la **Fig.1****,** une telle visseuse comprend un carter 2 logeant à l'intérieur des moyens moteurs qui dans ce mode de réalisation comprennent un moteur électrique. La visseuse comprend un arbre de sortie 3 qui présente une première extrémité 5 qui s'étend en dehors du carter 2. Cette première extrémité est destinée à coopérer avec un élément terminal qui est par exemple un embout de vissage ou une douille prévue pour coopérer avec un élément à visser. L'arbre de sortie 3 présente une deuxième extrémité 6 qui est directement reliée à l'arbre du moteur ou à un moyen de réduction, ce dernier étant relié à l'arbre du moteur.

La visseuse comprend des moyens de contrôle sous la forme d'une carte électronique principale 4 qui permettent de piloter la visseuse.

Selon une variante de réalisation, la transmission et notamment la réduction pourront être telles que l'arbre de sortie 3 s'étend perpendiculairement à l'axe des moyens moteur.

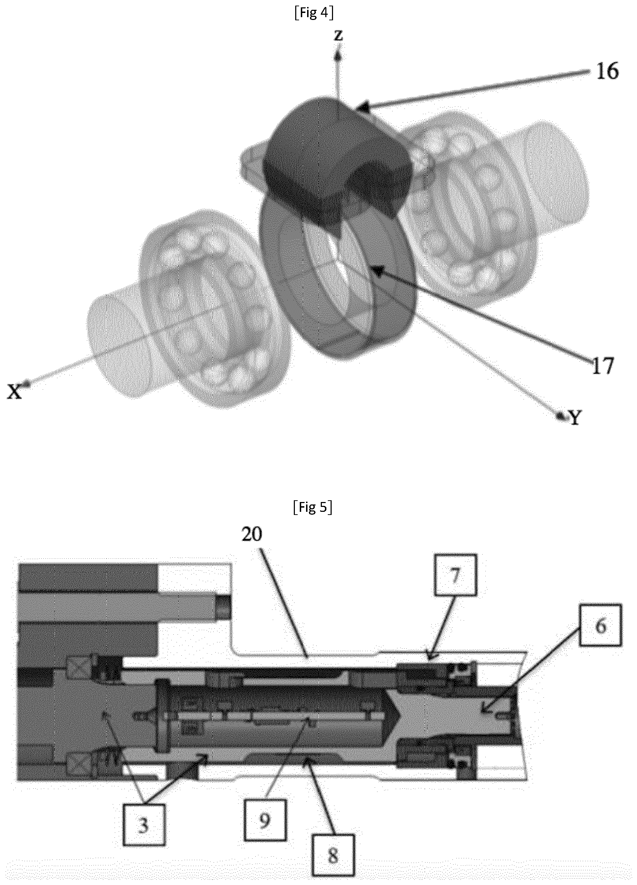

Cette visseuse intègre une carte électronique principale qui supporte les moyens de contrôle de la visseuse. Cette carte électronique principale reçoit notamment des signaux provenant d'un capteur de couple pour déterminer le couple de serrage à partir de la mesure des déformations de l'arbre de sortie 3 au moyen des jauges. La partie 20 de l'outil est représenté sur la **Fig. 5****.**

Cette visseuse représenté en entier par le **Fig. 1** intègre également un capteur de couple. Ce capteur se présente sous la forme d'un module traversé par l'arbre de sortie de la visseuse. Il intègre :
- un transformateur tournant 7,
- un arbre sur lequel est collé un pont de jauges de contraintes 8,
- une carte électronique embarquée dans un alésage coaxial à l'arbre 9.

Le transformateur tournant fournit à la carte embarquée une tension électrique produite par la carte principale de la visseuse et qui, une fois redressée par la carte embarquée, alimente le pont de jauges de contraintes. Ce pont de jauge produit un signal de sortie sous la forme d'une tension qui est transformée en signal numérique par le circuit embarqué pour ensuite être récupéré via le transformateur tournant et renvoyé vers la carte électronique principale. La fréquence du signal de tension alternatif alimentant le bobinage 9 qui émet le champ électromagnétique est typiquement compris entre 100 Khz et 200 Khz. La communication s'effectue typiquement à un débit compris entre 1 Mbits et 2 Mbits par seconde.

La présente invention repose sur l'usage d'un matériau nommé plasto-ferrite alliant une matrice en plastique ou résine chargée avec de la poudre de ferrite pour la réalisation de bagues du transformateur tournant. Voici deux exemples de matières proposées pour réaliser les bagues constituant le transformateur tournant :
- une première matière comportant une matrice en polyamide et comme métal : du Fer, du Nickel et du Zinc, ainsi que de l'Aluminium et du Silicium en proportion moindre.
- une seconde matière comportant une matrice en polyacétal (P.O.M. en abrégé) et comme métal du Fer, et du Sodium en faible proportion.

Selon un alternative au polyamide et polyacétal, la matrice peut être également constituée de polysulfure de phénylène.

On peut noter que ces plasto-ferrites disposent d'une concentration en ferrite bien plus faible qu'un composant conventionnel fritté dont la proportion en ferrite est supérieure à 95% pour une perméabilité de : µ >100). L'expérimentation a montré que le rendement de la transformation énergétique est optimal pour une concentration en ferrite comprise entre 80 % et 95 % de la masse totale du matériau plasto-ferrite. Cette valeur de perméabilité magnétique est donnée sans unité en fait, c'est la multiplication de cette valeur par la perméabilité magnétique du vide µ0 (qui elle est en Henry par mètre [H/m] ). Le résultat donne la perméabilité magnétique du matériaux.

Pour une proportion de 82%, on obtient une perméabilité électromagnétique de µ=8, et pour une proportion de 89 %, on obtient : µ=14.

La faible teneur en ferrite altère grandement la perméabilité magnétique (µ variant de 5 à 30). Cette déficience est compensée par un bobinage spécifique décrit plus loin dans la description. Par ailleurs, une rémanence faible du transformateur est recherchée de manière à maximiser le rendement du transformateur. Pour cette raison, il est nécessaire de minimiser une autre variable qui est le champ coercitif, celui doit être compris entre 50 et 1000 A/m

De cette manière, le transformateur parcouru par un champ magnétique (nécessaire au principe de transmission de flux du primaire au secondaire) conserve sa propriété magnétique inchangée.

L'effet d'hystérésis tel que montré à la **Fig.2** illustre ce principe. Sur cette figure, l'axe x indique la force du champ magnétique H et l'axe y, le degré de magnétisation B. Cette figure montre bien que la relation entre la force du champ (H) et l'aimantation (B) n'est pas linéaire. Ainsi, si le matériau est démagnétisé (H = B = 0), alors la courbe d'aimantation initiale augmente rapidement au début, puis devient asymptotique en atteignant le point de saturation magnétique (Hs). Si, par la suite, le champ magnétique est réduit de manière monotone, alors B suit une courbe différente, d'où le phénomène d'hystérésis. Lorsque le champ devient nul, l'aimantation est décalée de l'origine d'une valeur égale à la rémanence. Lorsqu'il n'y a pas de champ magnétique, il n'y a pas non plus (au début) de magnétisation et les courbes sont confondues dès l'origine.

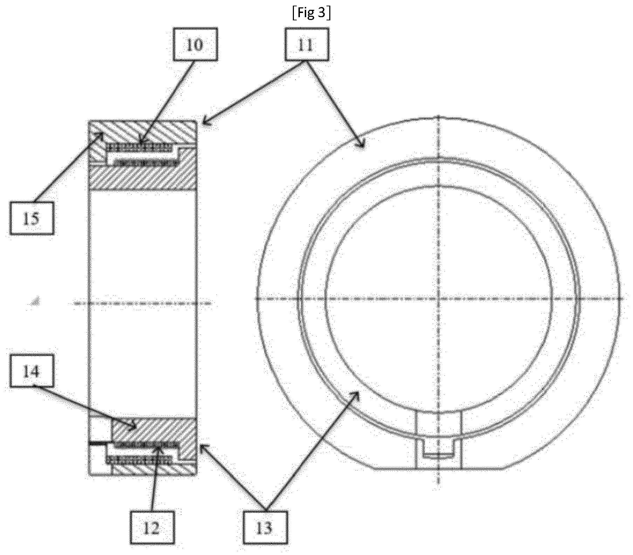

La **Fig. 3** représente la section d'un transformateur tournant vue de face et vue de coté selon un exemple de réalisation.

Le transformateur tournant comporte un bobinage 10 à l'intérieur du stator 11, et un second bobinage 12 autour du rotor 13. Comme le montre ces deux figures, le transformateur tournant comporte notamment deux noyaux qui peuvent être de formes multiples et placés en vis-à-vis (ici dans l'exemple illustré par ces deux figures : deux bagues concentriques). Ces deux noyaux sont munis chacun d'un bobinage. Chaque bobinage tantôt primaire, tantôt secondaire, génère ou recueille un champ magnétique canalisé par les noyaux en plasto-ferrite.

La vue en section montrée à la Fig. 3 permet de visualiser la géométrie des noyaux magnétiques et la disposition des deux bobinages 10 et 12 en vis-à-vis. Chaque bobine est composée de fils émaillés d'une section et d'un nombre de tours de fils spécifiques.

Ces représentations montre les deux noyaux magnétiques 14 et 15 servant de support aux bobinages, ces noyaux formant deux anneaux l'un interne et l'autre externe. L'ensemble des caractéristiques des deux bobinages 10 et 12 et des deux noyaux 14 et 15 de plasto-ferrite définissent les propriétés intrinsèques du transformateur tournant dans sa capacité à transmettre le flux magnétique souhaité.

Le dimensionnement des bagues est calculé par la théorie du magnétisme et simulation. Avec la plasto-ferrite à la différence d'un matériau de ferrite pur plus performant, la densité de flux généré est faible à cause du faible rapport de couplage.

L'inductance affecte par sa valeur la capacité à transmettre avec un même bobinage un signal de puissance et un signal de transmission haute fréquence.[1]

La première étape du dimensionnement du transformateur tournant consiste en une simulation numérique afin de calculer :
- les flux magnétiques induits,
- le rapport de couplage entre le stator et le rotor dans les deux sens qui doit être maximal et le plus proche de 1,
- l'inductance du stator doit être comprise de préférence entre 5 et 20 µH suivant la taille du transformateur,
- l'inductance du rotor doit être comprise de préférence entre 40 et 200 µH suivant la taille du transformateur.

La largeur des plages est choisie de façon à satisfaire à la double utilisation du transformateur : alimentation de la carte électronique embarquée sur l'arbre de sortie à une fréquence comprise entre 100 Khz et 200 Khz et la transmission du signal du pont de jauges numérisé (conditionné) à haute fréquence.

L'inductance est dépendante des propriétés du noyau (perméabilité magnétique, de la géométrie du noyau, de la valeur de l'entrefer et des caractéristiques de la bobine (nombre de spires et section du fil).

La deuxième étape consiste à prototyper et tester car la simulation ne permet pas d'évaluer aisément les pertes liées à l'environnement du transformateur (arbre et carter en acier, capotage perméable) qui dégradent les rapports de couplage.

Pour compenser le faible rapport de couplage, résultant de la faible densité en ferrite, il faut augmenter le courant sans amplifier démesurément les pertes en joules. Pour cela, la taille du fil de bobinage est augmentée dans la limite de l'encombrement et du critère d'inductance minimal.

Enfin, l'inductance minimale contraint un nombre minimal de spires.

L'ensemble de ces critères constitue les variables dépendantes du système.

Pour permettre la fonctionnalité du transformateur tournant avec ce matériau particulier, l'expérimentation a conduit à concevoir un bobinage qui minimise les pertes en joule et augmente le rapport de couplage. Le critère d'optimisation a été de réduire les pertes par augmentation de la section des fils de bobines dans la limite de la réduction du nombre de spires.

Pour compenser la faible valeur de µ, le diamètre des fils initialement de 0.11 à 0.15 millimètres est augmenté pour atteindre une valeur entre 0.25 et 0.35 millimètres.

L'autre moyen d'optimisation est le recours à des « piquages » qui permettent de spécialiser le bobinage en fonction du mode d'utilisation, alimentation ou transmission de données.

Le piquage consiste à prévoir des connexions électriques entre les deux extrémités des bobines permettant une configuration de bobinage double sur le rotor et le stator utilisé selon le mode fonctionnel (alimentation de puissance ou communication haute fréquence). Ce piquage permet, en mode de génération de puissance pour l'alimentation du circuit secondaire, de configurer un nombre maximum de spires. Ce piquage permet aussi, en mode de communication haute fréquence, d'augmenter la capacité de communication par réduction du nombre de spire.

La **Fig. 4** montre une vue en perspective du couplage entre le rotor et le stator selon un autre mode de réalisation d'un transformateur tournant.

Afin de répondre à une contrainte de compacité du produit une architecture de transformateur particulière est apportée. La partie rotor 17 reste inchangée avec le principe d'une bague torique munie d'une bobine réalisée par un enroulement de fil traditionnel. La partie stator 16 par contre adopte une forme en «C» dont l'ouverture permet le passage de la partie rotor 17. Le noyau de la partie stator occupe un volume prismatique qui permet de localiser la forme dans une portion de révolution autour de l'axe de l'outil. La compacité de la solution est dégradée localement sur un secteur mais permet d'apporter une compacité maximale de la solution hors de ce secteur.

Avec une architecture de la sorte le couplage sur un secteur limité affecte la densité de flux magnétique.

La **Fig. 5** montre une vue en coupe de la partie référencée 20 de l'outil présenté sur la **Fig. 1** montrant le rotor et le stator d'un transformateur tournant selon un exemple de réalisation. L'arbre de sortie 3 supporte une carte électronique 12 animé également en rotation. Cette carte est reliée à des jauges de contraintes mesurant le couple.

## Revendications

1. Outil électromécanique (1), tel qu'une visseuse une perceuse ou un dispositif de mesure de couple, comportant un carter (2), un arbre (3) animant en rotation un embout, et un transformateur tournant (10, 11, 12, 13, 14, 15) ledit arbre intégrant un circuit électronique destiné à mesurer une grandeur physique de l'arbre, ledit transformateur tournant comportant un stator (11) solidarisé avec le carter et un rotor (13) fixé à l'arbre, le stator intégrant un premier bobinage (10) et un premier support dudit premier bobinage, le rotor intégrant un deuxième bobinage (12) et un deuxième support dudit deuxième bobinage, **caractérisé en ce que** lesdits supports sont réalisés en matériau plasto-ferrite.

2. Outil selon la revendication 1 dans lequel la grandeur physique mesurée est un couple ou une force.

3. Outil selon la revendication 1 ou 2 dans lequel le matériau plasto-ferrite est constitué de différents métaux réduits en poudre et d'une matrice plastique liant les grains de métal.

4. Outil selon la revendication 3, **caractérisé en ce que** la matrice est choisie dans la liste de matériaux suivants : polyamide, polyacétale. polysulfure de phénylène.

5. Outil selon la revendication 3 ou 4, **caractérisé en ce que** la concentration en ferrite est comprise entre 80 % et 95 % de la masse totale du matériau plasto-ferrite.

6. Outil selon l'une quelconque des revendications précédentes, **caractérisé en ce que** le diamètre des fils entourant lesdits bobinages se situe entre 0.25 et 0.35 millimètres.

7. Outil selon l'une quelconque des revendications précédentes, caractérisé en ce la poudre de ferrite est amagnétique.

8. Outil selon l'une quelconque des revendications précédentes, caractérisé en que la poudre de ferrite est choisie dans une liste de poudre comprenant : (alliage de Fer, Nickel, Zinc, Aluminium et Silicium), (alliage de Fer et Sodium).

9. Outil selon l'une quelconque des revendications précédentes, **caractérisé en ce que** la perméabilité magnétique de la plasto-ferrite est comprise entre 5 et 30.

10. Outil selon l'une quelconque des revendications précédentes, **caractérisé en ce que** le rapport du nombre de spires du premier bobinage (10) du stator (11) sur le nombre de spires du second bobinage (12) du rotor (13) est compris entre 0,2 et 0,5.

## Patentansprüche

1. Elektromechanisches Werkzeug (1), wie etwa ein Schrauber, eine Bohrmaschine oder eine Drehmomentmessvorrichtung. welches ein Gehäuse (2), eine Welle (3), die ein Ansatzstück in Rotation versetzt, und einen Drehtransformator (10, 11, 12, 13, 14, 15) aufweist, wobei in die Welle eine elektronische Schaltung integriert ist, die dazu bestimmt ist, eine physikalische Größe der Welle zu messen, wobei der Drehtransformator einen mit dem Gehäuse fest verbundenen Stator (11) und einen an der Welle befestigten Rotor (13) aufweist, wobei in den Stator eine erste Wicklung (10) und eine erste Halterung der ersten Wicklung integriert sind, wobei in den Rotor eine zweite Wicklung (12) und eine zweite Halterung der zweiten Wicklung integriert sind, **dadurch gekennzeichnet, dass** die Halterungen aus Plastoferritmaterial hergestellt sind.

2. Werkzeug nach Anspruch 1, wobei die gemessene physikalische Größe ein Drehmoment oder eine Kraft ist.

3. Werkzeug nach Anspruch 1 oder 2, wobei das Plastoferritmaterial aus verschiedenen pulverförmigen reduzierten Metallen und einer Kunststoffmatrix, welche die Metallkörner verbindet, besteht.

4. Werkzeug nach Anspruch 3, **dadurch gekennzeichnet, dass** die Matrix aus der Liste folgender Materialien ausgewählt ist: Polyamid, Polyacetat, Phenylenpolysulfid.

5. Werkzeug nach Anspruch 3 oder 4, **dadurch gekennzeichnet, dass** die Ferritkonzentration zwischen 80 % und 95 % der Gesamtmasse des Plastoferritmaterials liegt.

6. Werkzeug nach einem der vorhergehenden Ansprüche, **dadurch gekennzeichnet, dass** der Durchmesser der Drähte, welche die Wicklungen umgeben, zwischen 0,25 und 0,35 Millimetern liegt.

7. Werkzeug nach einem der vorhergehenden Ansprüche, **dadurch gekennzeichnet, dass** das Ferritpulver unmagnetisch ist.

8. Werkzeug nach einem der vorhergehenden Ansprüche, **dadurch gekennzeichnet, dass** das Ferritpulver aus einer Liste von Pulvern ausgewählt ist, welche umfasst: (Legierung aus Eisen, Nickel, Zink, Aluminium und Silizium), (Legierung aus Eisen und Natrium).

9. Werkzeug nach einem der vorhergehenden Ansprüche, **dadurch gekennzeichnet, dass** die magnetische Permeabilität des Plastoferrits zwischen 5 und 30 liegt.

10. Werkzeug nach einem der vorhergehenden Ansprüche, **dadurch gekennzeichnet, dass** das Verhältnis der Windungszahl der ersten Wicklung (10) des Stators (11) zur Windungszahl der zweiten Wicklung (12) des Rotors (13) zwischen 0,2 und 0,5 liegt.

## Claims

1. An electromechanical tool (1), such as a screwdriver, a drill or a torque measuring device, including a casing (2), a shaft (3) rotating a tip, and a rotating transformer (10, 11, 12, 13, 14, 15) said shaft integrating an electronic circuit intended to measure a physical quantity of the shaft, said rotating transformer including a stator (11) secured to the casing and a rotor (13) fastened to the shaft, the stator integrating a first coil (10) and a first support of said first coil, the rotor integrating a second coil (12) and a second support of said second coil, **characterised in that** said supports are made of a plasto-ferrite material.

2. The tool according to claim 1, wherein the measured physical quantity is a torque or a force.

3. The tool according to claim 1 or 2, wherein the plasto-ferrite material consists of different powdered metals and of a plastic matrix binding the metal grains.

4. The tool according to claim 3, **characterised in that** the matrix is selected from the list of following materials: polyamide, polyacetal, polyphenylene sulphide.

5. The tool according to claim 3 or 4, **characterised in that** the ferrite concentration is comprised between 80% and 95% of the total mass of the plasto-ferrite material.

6. The tool according to any one of the preceding claims, **characterised in that** the diameter of the wires surrounding said coils is between 0.25 and 0.35 millimetres.

7. The tool according to any one of the preceding claims, **characterised in that** the ferrite powder is non-magnetic.

8. The tool according to any one of the preceding claims, **characterised in that** the ferrite powder is selected from a list of powders comprising: (alloy of Iron, Nickel, Zinc, Aluminium and Silicium), (alloy of Iron and Sodium).

9. The tool according to any one of the preceding claims, **characterised in that** the magnetic permeability of the plasto-ferrite is comprised between 5 and 30.

10. The tool according to any one of the preceding claims, **characterised in that** the ratio of the number of turns of the first coil (10) of the stator (11) to the number of turns of the second coil (12) of the rotor (13) is comprised between 0.2 and 0.5.
